Europäisches Patentamt

European Patent Office

Office européen des brevets

(11) Publication number: 0 631 429 A1

# EUROPEAN PATENT APPLICATION
## published in accordance with Art. 158(3) EPC

(21) Application number: 94904306.1

(22) Date of filing: 12.01.94

(86) International application number: PCT/JP94/00029

(87) International publication number: WO 94/16519 (21.07.94 94/17)

(51) Int. Cl.5: **H04N 1/40, H04N 1/387**

(30) Priority: 12.01.93 JP 19699/93
12.01.93 JP 19700/93

(43) Date of publication of application: 28.12.94 Bulletin 94/52

(84) Designated Contracting States: BE DE GB

(71) Applicant: NIPPON STEEL CORPORATION
6-3 Otemachi 2-chome
Chiyoda-ku
Tokyo 100 (JP)

(72) Inventor: NAKAYAMA, Tetsuro
Nippon Steel Corporation,
6-3,
Ohtemachi 2-chome
Chiyoda-ku,
Tokyo 100 (JP)

(74) Representative: VOSSIUS & PARTNER
Postfach 86 07 67
D-81634 München (DE)

(54) METHOD AND APPARATUS FOR PROCESSING IMAGE DATA.

(57) A first image data representing an image containing a plurality of first pixels at first density is converted into a second image data representing the image by a plurality of second pixels at a second density which is a selected multiple of the first density. For each of the first pixels which are overlapped with the second pixels, the ratio of the size of the overlapped portion to the size of the first pixels is determined on the basis of the selected multiple. The weighted mean of the pixel signals representing each of the first pixels overlapped is calculated by the weight coefficients determined by the corresponding ratio, thus obtaining the pixel signals representing the second pixels. Also, before the first image data are converted into the second image data, the first image data is subjected to a given correction process as required. This correction process is carried out as follows: the constants of correction of the given correction process for each of the pixel signals of the first pixel data are determined; the pixel signals are divided into a plurality of bit blocks so that each block contains a given number of bits; a given mathematical operation is executed on the number represented by each of the bit blocks of each pixel signal, and the constants for the correction determined for each pixel signal to determine corrected partial data; and corrected pixel signals are generated by combining the corrected partial data obtained for each of the plurality of bit blocks of each pixel signal.

# FIG. 4

WEIGHT COEFFICIENT

MULTIFICATION FACTOR — 6 BITS → LUT FOR COEFFI-CIENT SELECTION (ROM) 44, 44a

7 BITS

LUT FOR MULTI-PLICATION (ROM) 42, 42a → 8 BITS

CLOCK → DATA TIMING UNIT 45

DIFFERENTIAL OPERATION LATCH 43 → 8 BITS

VIDEO DATA — 8 BITS → VIDEO DATA LATCH 41 → 8 BITS

ADDER 46 → 9 BITS → DIVIDER 47 → 8 BITS

TECHNICAL FIELD

The present invention relates to a method of and an apparatus for processing image data, and in particular, to a method of and an apparatus for processing image data in which data inputted from an image input device such as a charge-coupled device (CCD) is subjected to a shading correction, and if desired to a line density conversion.

BACKGROUND ART

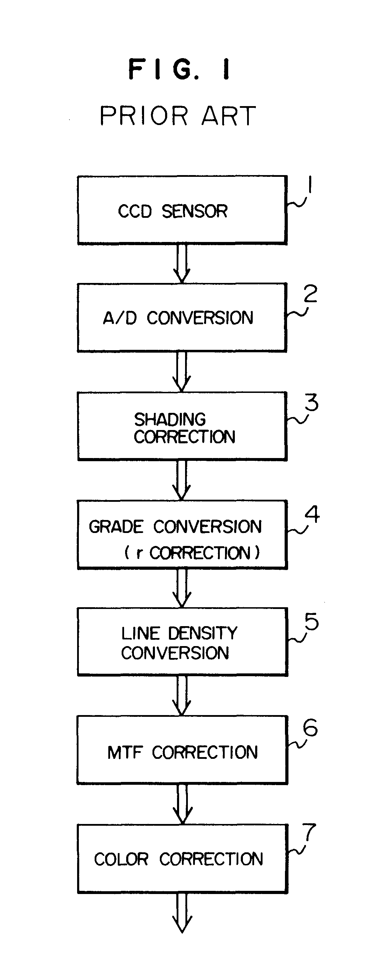

Heretofore, in order to obtain data suitable for presentation on a display from image data produced from an input device such as a CCD, it has been known to execute processing as shown in Fig. 1.

That is, a color or monochrome analog signal representing an image to be displayed is attained from a CCD sensor 1 (step 1) and then the analog signal undergoes an analog-to-digital (A/D) conversion into a digital signal (step 2). In an ordinary case, to correct an error due to shading distortion of a white level of the image signal obtained from each of a plurality of CCD elements constituting the CCD sensor, each pixel signal undergoes a shading correction (step 3). The resultant signal is then subjected to grade conversion (γ conversion; step 4). The converted signal undergoes conversion of line density if necessary (step 5). After subjected to a known modulation transfer function (MFT) correction (step 6) and a color correction (step 7), the signal is applied to a display (not shown) or a recording apparatus.

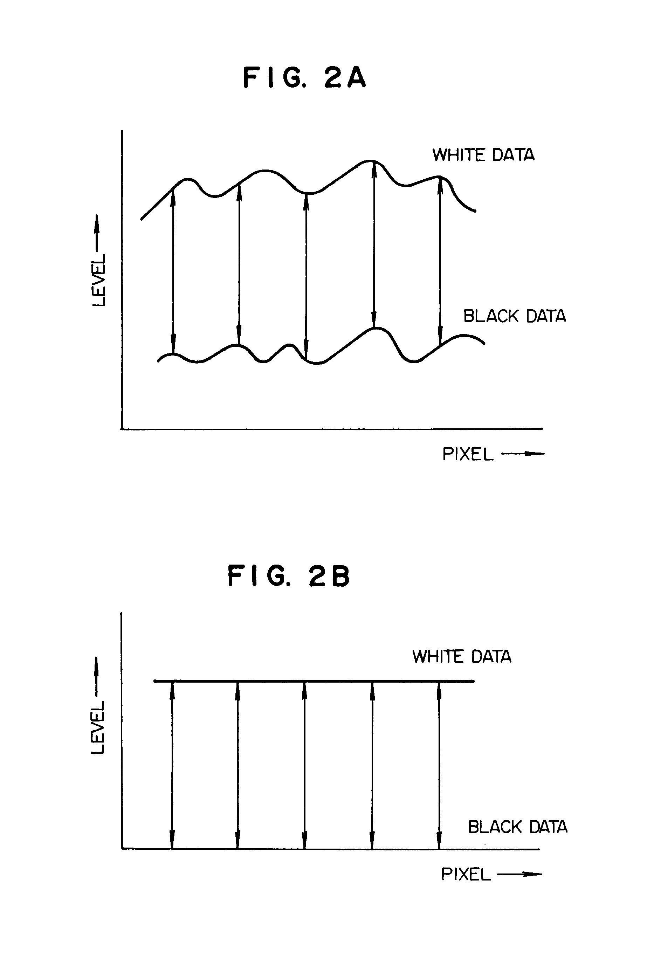

The shading correction will be described in more detail. Each pixel signal generated from an image input device such as a CCD includes a black-level error due to deviation in a characteristic of CCD element and a white-level error related to the shading distortion as shown in Fig. 2A. It is hence necessary to correct the pixel signal of each CCD element to obtain uniform black and white levels as shown in Fig. 2B. According to one of the known correcting methods, correction constants of the respective CCD elements are beforehand determined and stored in a table. For an original pixel signal produced from each CCD element, the correction constant is read from the table to correct the original pixel signal by the correction constant so as to obtain a corrected pixel signal. In a known correction method to achieve the computation at a high speed, a corrected pixel signal is computed in advance for each of the combinations between various original pixel signals and various correction constants, and memorized in another table. For each original pixel signal generated from a CCD element, the corrected pixel signal is readily obtained by referring to the table according to the combination of the original pixel signal and the corresponding correction constant.

On the other hand, it is also known to represent each pixel signal by 12 bits. Assuming that the black-level error due to deviation among CCD elements is 6.25% or less, most significant four bits of the 12 bits are fixed and the black level is represented by eight bits, while assuming that the white-level error of each CCD element due to shading distortion is 25% or less, most significant two bits thereof are fixed and the white level is expressed by ten bits.

To correct the black and white levels for the pixel signal, the following computation is carried out.

$$Dout = (Din - Dbk) \times 4096/(Dw + 3072) \qquad (1),$$

where
    Dout:    12-bit image signal after correction
    Din:    12-bit image signal before correction
    Dbk:    Black level of related pixel (8 bits)
    Dw:    White level of related pixel (10 bits)

Then, the obtained Dout is converted into a value in a format (e.g., 11 bits) necessary for a subsequent image processing apparatus.

However, since the multiplication in the expression, particularly, include the pixel signals Din of 12 bits and the white-level Dw of 10 bits, the table is required to have cells for $2^{12} \times 2^{10} = 2^{22}$ combinations, and moreover, since the respective signal lengths are 10, 11, and 12 bits, each cell of the table is required to have a capacity of two words (16 bits). In consequence, the table requires a considerably large memory in an order of 32 mega (M) bits.

To overcome this difficulty, if the white level is expressed by eight bits on the assumption that the error in the white level due to shading distortion is, for example, 6.25% or less, the memory necessary for the table is reduced to about eight megabits. However, when the shading distortion actually exceeds 6.25%, there occurs non-uniformity in color or the like, which leads to a problem of remarkable deterioration in the image data quality.

3

Moreover, when the CCD sensor has resolution, namely, a line density of the original pixel signals which is different from that of an apparatus to process the original pixel signals, it is necessary to convert the line density of the original pixel signals so as to be adapted to that of the processing apparatus. For example, in a case where the line density of the original pixel signals is 400 dots per inch (dpi) and that of the processor is 320 dpi, the line density, i.e., 400 dpi of the original pixel signals is required to be decreased to 320 dpi. To this end, each pixel after conversion must include 1.25 pixels obtained from the CCD sensor. Actually, it is common to utilize a nearest neighbor method in which each converted pixel signal is represented by an original pixel signal nearest to a central coordinate point of the converted pixel.

However, according to the nearest neighbor method described above, every fourth data is ignored and hence there appears an abrupt change between consecutive data, so that the overall image becomes rough, involving a problem of a conspicuous deterioration in the picture quality. Moreover, also in a case where the line density is increased, there arises a problem of roughness similar to or worse than that of the original line density.

## DISCLOSURE OF INVENTION

It is therefore a first object of the present invention to provide a method of and an apparatus for processing image data obtained from an image input device such as a CCD sensor in which a predetermined correction processing can be achieved using a possibly small memory capacity without deteriorating the quality of image data.

A second object of the present invention is to provide a method and an apparatus further capable of converting a line density of image data while possibly suppressing deterioration in the quality of image data.

According to the present invention, an image processing method of applying a predetermined correction processing to image data representing an image having a plurality of pixels each being represented by a pixel signal including a predetermined number of bits, comprises the steps of determining for each of the pixel signals, a correction constant to be used for the predetermined correction processing; subdividing the pixel signal into a plurality of bit blocks, each of the bit blocks including a predetermined number of bits; applying a predetermined operation processing to a number represented by each of the plural bit blocks of the pixel signal and to the correction constant determined for the pixel signal, thereby obtaining corrected partial data, and combining the respective corrected partial data obtained for the plural bit blocks, respectively, of the pixel signal, thereby obtaining a corrected pixel signal.

An image data processing apparatus according to the present invention for applying a predetermined correction processing to image data representing an image having a plurality of pixels, each being represented by a pixel signal including a predetermined number of bits, comprises means for determining, for each of the pixel signals, a correction constant to be used for the predetermined correction processing; means for subdividing the pixel signal into a plurality of bit blocks, each of the bit blocks including a predetermined number of bits; means for applying a predetermined operation processing to a number represented by each of the plural bit blocks of the pixel signal and to the correction constant determined for the pixel signal, thereby obtaining corrected partial data; and means for combining the respective corrected partial data obtained for the plural bit blocks, respectively, of the pixel signal, thereby obtaining a corrected pixel signal.

As described above, since the image data is subdivided into a plurality of blocks at predetermined positions and the respective blocks, together with corresponding correction constants, are converted in respective tables which are set correspondingly to the respective blocks into respective computation results which are combined, the capacity of the tables can be reduced as compared with that of the tables which are set correspondingly to the original image data.

The image data processing method according to the present invention further comprises a processing of converting first image data representing the image by a predetermined number of first pixels into second image data representing the image by a predetermined number of second pixels each having a size different from that of the first pixel, wherein the processing of converting first image data comprises the steps of determining, for each of the first pixels overlapping with each of the second pixels, a ratio of a size of an overlapped portion of the first pixel to a size of the first pixel, and averaging weighted pixel signals, which are representing the respective first pixels overlapping with the second pixel and corrected by weight coefficients determined by the corresponding ratios determined for the respective first pixels, thereby obtaining a pixel signal representing the second pixel.

In addition, the image data processing apparatus according to the present invention further comprises means for converting first image data representing the image including a predetermined number of first pixels into second image data representing the image by a predetermined number of second pixels each

EP 0 631 429 A1

having a size different from that of the first pixel. The converting means includes means for determining, for each of the first pixels overlapping with each of the second pixels, a ratio of a size of an overlapped portion of the first pixel to a size of the first pixel, and means for averaging weighted pixel signals, which are representing the respective first pixels overlapping with the second pixel and corrected by weight coefficients determined by the corresponding ratios determined for the respective first pixels, thereby obtaining a pixel signal representing the second pixel.

As described above, the original pixels corresponding to the converted pixel are subjected to weighted averaging by weighting each of the respective original pixels by a weighting coefficient corresponding to an occupation ratio of the orignal pixel in the converted pixel. Thus, it is possible to effectively reflect the data of each original pixel on the data of the converted pixels so that the change in data between consecutive pixels after conversion becomes smooth. Particularly, for image data in a form of matrix, it is desired to apply the conversion processing to one or more lines of the data in a row direction of the matrix and thereafter or in parallel, conduct similar processing in a column direction of the matrix.

BRIEF DESCRIPTION OF DRAWINGS

Fig. 1 is a flowchart showing a processing procedure of a conventional image data processing method.

Figs. 2A and 2B are graphs respectively showing a state of deviations of black and white levels of original pixel signals attained from a CCD element and a state of the black and white levels of corrected pixel signals obtained by correcting the original pixel signals.

Fig. 3 is a block diagram showing an arrangement of an image data processor according to an embodiment of the present invention.

Fig. 4 is a block diagram showing the structure of an apparatus for converting line density of image data employed in another embodiment according to the present invention.

Figs. 5A, 5B, and 5C are diagrams showing typical examples of a positional relationship between pixels representing original image data and image data of which the line density is converted.

BEST MODE FOR CARRYING OUT THE INVENTION

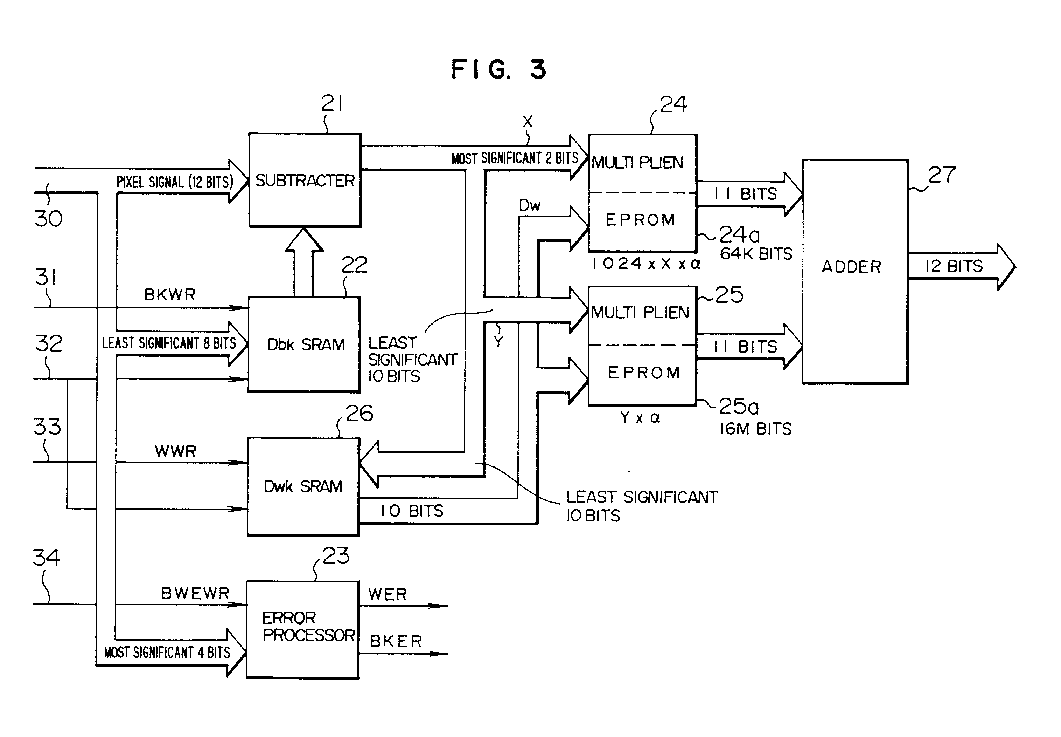

Referring to Fig. 3, description will be given of a first embodiment according to the present invention.

Fig. 3 is a block diagram showing the configuration of a circuit to execute shading correction shown in Fig. 1.

Each pixel signal attained from an input device such as a CCD sensor 1 of Fig. 1 is converted by an A/D converter into a 12-bit pixel signal Din which is delivered via a data bus 30 to a subtracter 21 and an error processor 23. In the image processor, in order to determine a black level and a white level of each CCD element, as well known, a black signal and a white signal obtained from a reference black plate (state of input "0") and a reference white plate, respectively, are measured prior to acquisition of image data. The black signal (least significant 8 bits) is stored as a black correction constant of each CCD element via the data bus 30 in a Dbk SRAM 22 at its address assigned to the CCD element. On the other hand, the black level data Dbk of the CCD element is substrated from the 12-bit pixel signal Din representing the white signal by a substracter 21 and the least significant 10 bits of the result of the substraction are stored as a white correction constant in a Dw SRAM 26 at its address assigned to the CCD element. In this case, each of the Dbk SRAM and the Dw SRAM has a capacity of 256 kbits.

In this regard, most significant four bits of each of the black and white signals are fed to the error processor 23. The error processor 23 compares the received black and white signals with predetermined upper-limit and lower-limit levels respectively predetermined therefor. When the black signal is higher than the predetermined upper-limit level or the white signal is lower than the predetermined lower-limit level, the error processor 23 determines that the CCD element is abnormal and generates a black error signal BKER or a white error signal WER, thereby taking an appropriate measure. However, this is not directly related to the present invention and hence detailed description thereof will be omitted.

Subsequently, the pixel signal Din (12 bits) of each CCD element constituting the image signal to be processed is delivered to the subtracter 21, while the black correction constant of the CCD element is read from the Dbk SRAM 22 and fed to the subtracter 21. The subtracter 21 subtracts the black level Dbk from the pixel signal Din to obtain a 12-bit difference signal Din - Dbk and the most significant two bits and least significant ten bits thereof are supplied to multipliers 24 and 25, respectively.

The multiplier 24 obtains a first correction data from the most significant two bits of the difference signal Din - Dbk between the pixel signal Din and the black correction constant Dbk obtained for each CCD by the subtracter 21 and the correction constant (ten bits) associated with the element. In this case, the first

5

correction data is data obtained by applying the most significant two bits of the difference signal Din - Dbk and the correction constant (ten bits) to a computation formula, which will be described later. The multiplier 24 includes an EPROM 24a in which the most significant two bits of (Din - Dbk) and the correction constant (10 bits), together with the first correction data (11 bits) corresponding thereto, are stored in a form of a look-up table.

Furthermore, the multiplier 25 obtains a second correction data from the least significant ten bits of the difference signal Din - Dbk and the correction constant (10 bits) for the element. In this connection, the second correction data is data attained by applying the least significant ten bits of (Din - Dbk) and the correction constant (10 bits) to a computation formula, which will be described later. The multiplier 25 includes an EPROM 25a in which the least significant ten bits of (Din - Dbk) and the correction constant (ten bits), together with the second correction data (11 bits) corresponding thereto, are stored in a form of a look-up table.

The first correction data and the second correction data obtained from the multiplier 24 and 25, respectively, are added together by an adder 27 to be outputted as a 12-bit pixel signal undergone the shading correction.

In this regard, write and read timings of data into/from the Dbk SRAM 22 and Dw SRAM 26 are controlled by clock signals BKWR and WWR supplied via clock buses 31 and 33 from a control circuit (not shown). Furthermore, the respective write and read addresses are specified by address signals supplied via an address bus 32 from the control circuit.

In this case, the multiplier 24 has an EPROM 24a having a capacity of 32 k bits X 2 = 64 k bits and the multiplier 25 has an EPROM 25a having a capacity of 4 M bits X 4 = 16 M bits. In the EPROM 24a, the most significant two bits of the pixel signal after receiving the subtraction processing, the 10-bit white data Dw, and a product of the multiplication thereof are stored in a table. That is, since the input data to the EPROM 24a has 2 bits + 10 bits and its output has 11 bits, each cell width of the table is two words (16 bits) and the number of cells (combination) is $2^2 \times 2^{10} = 2^{12}$ and hence the necessary capacity is $2^{12} \times 16$ = 16 kilobits. Similarly, in the EPROM 25a, the least significant ten bits of the image data after receiving the subtraction processing, the 10-bit white data Dw, and a product of the multiplication thereof are stored in a table. That is, since the input data to the EPROM 25a has 10 bits + 10 bits its the output has 11 bits, each cell width of the table is two words (16 bits) and the number of cells (combination) is $2^{10} \times 2^{10} = 2^{20}$ and hence the necessary capacity is $2^{20} \times 16$ = 16 megabits.

Next, description will be given in detail of essential operations of the embodiment.

As described above, the computation in which the original image signal Din (12 bits) of each CCD element is processed to produce the corrected image signal Dout (12 bits) is given by an equation:

Dout = (Din - Dbk) X 4096/(Dw + 3072)     (2).

Assuming that Din' = Din - Dbk and $\alpha$ = 4096/(Dw + 3072), the equation is given by
Dout = Din' X $\alpha$, which can be separated as follows.

$$\mathtt{Dout\ =\ (1024\ x\ X\ +\ Y)\ x\ \pmb{\alpha}}$$

$$\mathtt{=\ 1024\ x\ X\ +\ d\ +\ Y\ x\ \pmb{\alpha}}$$

$$\mathtt{(0\ \leq\ X\ \leq\ 3,\ 0\ \leq\ Y\ \leq\ 1023)\quad ....\ (3),}$$

That is, since the first term X of the right side is the value of the most significant two bits (block) of Din and the second term Y thereof is the value of the least significant ten bits (block), it is only necessary to first obtain the products in multiplication of the first and second terms and then add (combine) the products together. For these multiplying operations, it is required to provide the tables having the sizes above, namely, 64 kilobit EPROM 4a and the 16 megabit EPROM 5a.

First, as initialization, the 8-bit black data Dbk and 10-bit white data Dw, which are determined by the outputs of each of the CCD elements obtained from the reference black and white images as described above, are stored in the SRAMs 22 and 26, as correction constants of the CCD element.

Then, the original image signal Din attained from each CCD element is inputted to the subtracter 21 and the 8-bit black data Dbk is simultaneously inputted to the subtracter 1, which executes subtraction between them to obtain Din' = Din - Dbk. Of the 12-bit output Din', the most significant two bits (X) are supplied to the multiplier 24, whereas the least significant ten bits (Y) are fed to the multiplier 25. In addition, simultaneously, the ten-bit white data Dw is delivered from the SRAM 26 to the multipliers 4 and 5. Thereafter, in the multiplier 24, a product in multiplication of the most significant two bits (X) of the inputted Din' and the white data Dw is computed with reference to the table in the EPROM 4a and the computation result A (11 bits) is outputted to the adder 27. Similarly, in the multiplier 25, a product in multiplication of the least significant ten bits (Y) of the inputted Din' and the white data Dw is computed with reference to the table in the EPROM 5a and the computation result (11 bits) is outputted to the adder 27. In the adder 27, the computation results from the multipliers 24 and 25 are added to each other to output the result of the addition as image data to an external device.

Incidentally, although the image signal has 12 bits which are subdivided into a block of most significant two bits and a block of least significant ten bits, the present invention is not restricted by this embodiment. Naturally, the position of subdivision may be arbitrarily altered and the image signal may be subdivided into three or more blocks.

As described above, according to the embodiment, an image signal is subdivided into a plurality of blocks at predetermined positions and each of the blocks and the correction constant corresponding thereto are converted into a computation result with reference to a table which is specifically set for the block. Then, the computation results are added together. This arrangement considerably reduces the size of the tables as compared with a case where the tables are set directly according to the size of the original image signal and makes it possible to efficiently correct the image signal with a possibly minimized memory capacity.

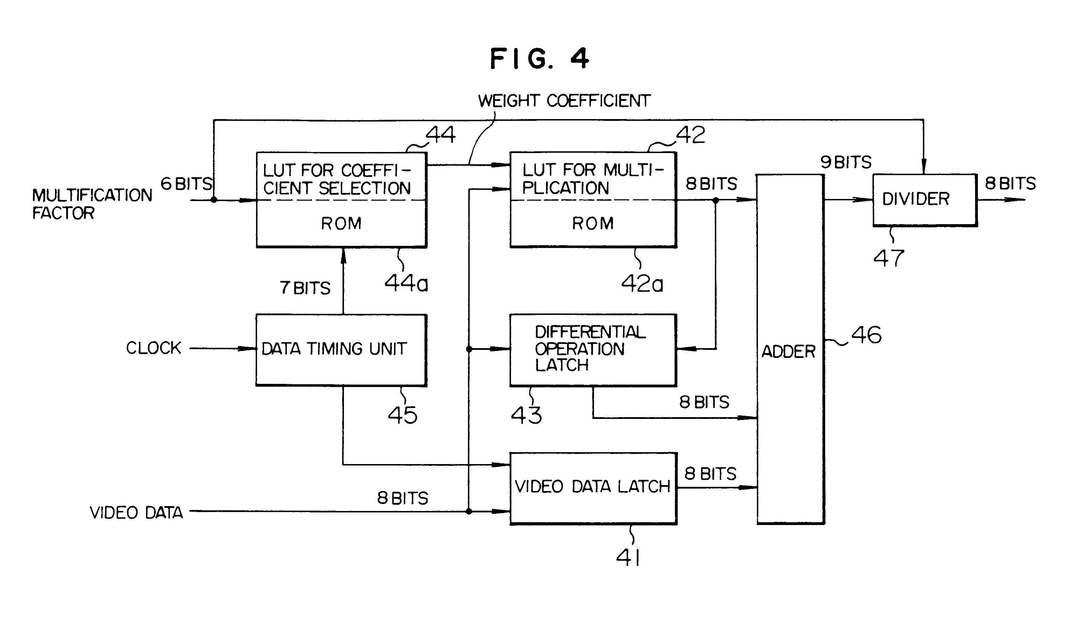

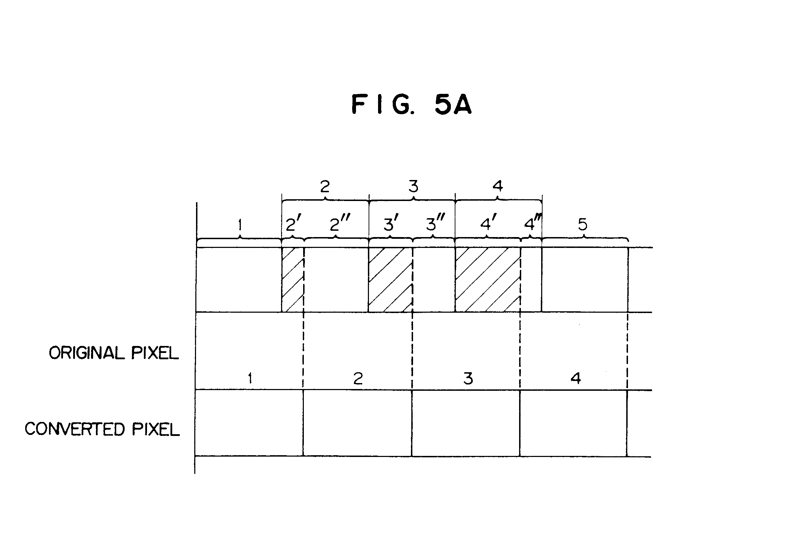

Next, referring to Fig. 4 and Figs. 5A to 5C, description will be given of a second embodiment according to the present invention. In the second embodiment, the conversion of line density of image data is carried out in addition to the correction of shading distortion. The following description relates to the processing of line density conversion. In this connection, the processing of line density conversion is effected for image data attained by conducting operations such as correction processing of shading distortion for image data produced from the CCD element. Incidentally, the first embodiment has been explained about a case where each 12-bit original image signal is subjected to correction processing of shading distortion so as to attain a 12-bit corrected image signal. However, a line density converter of this embodiment will be explained about a case where a line density conversion is applied to image data including 8-bit image signals for simplicity of description. Naturally, various processings in the following description are applicable to 12-bit image signals.

Fig. 4 is a block diagram showing the constitution of a row-directional processing section of an apparatus for converting the line density of an image signal. Although a column-directional processing section may be provided if necessary, the configuration thereof is similar to that of the row-directional processing section and hence description thereof will be omitted.

In this embodiment, the magnification factor of line density conversion is 51% to 99% in the row direction. Description will be given of the principle of the embodiment in a case where the row-directional magnification factor is 80% for simplicity of description. For the magnification factor of 80%, a relationship between the size of each row-directional original pixel and that of each converted pixel is such that five original pixels correspond to four converted pixels as shown in Fig. 5A. In consequence, the first converted pixel 1 in the row direction corresponds to the sum of the first original pixel 1 and a portion 2' of the second original pixel 2 overlapping with the converted pixel 1. The second converted pixel 2 corresponds to the sum of a portion 2'' obtained by removing the overlapping portion 2' from the second original pixel 2 and a portion 3' of the third original pixel 3 overlapping with the converted pixel 2. The third converted pixel 3 corresponds to the sum of a portion 3'' obtained by removing the overlapping portion 3' from the third original pixel 3 and a portion 4' of the fourth original pixel 4 overlapping with the converted pixel 3. The fourth converted pixel corresponds to the sum of a portion 4'' obtained by removing the overlapping portion 4' from the fourth original pixel 4 and the fifth original pixel 5. The ratios (weight coefficients) of the portions 2', 3' and 4' of the original pixels overlapping with the converted pixels to the respective original pixels successively vary at a fixed rate determined by the magnification factor of the line density conversion. Moreover, the fifth converted pixel is attained through the same processing as that for the first converted pixel.

As mentioned above, the conversion processing with the magnification factor of 80% is a repetition of the processing to convert the five original pixels into four converted pixels. When the magnification factor changes from 51% to 99% by an increment of 1%, the ratio (weight coefficient) of a portion of the original pixel overlapping with the converted pixel to the original pixel at each magnification factor takes one of 2167 different values. In addition, at one magnification factor, the ratios, or the weight coefficients change periodically, and when the magnification factor is fixed, a series of the weight coefficients are determined. In general, assuming that the respective converted pixels are obtained through a repetition of the processing to convert $\underline{n}$ original pixels, the weight coefficients can be beforehand determined for the first to n-th original pixels at each of the magnification factors. This means that when the magnification factor and the position of each original pixel in one cycle of the processing are determined, the weight coefficient of the pixel is determined. When the position in the cycle is represented by a count number of clock pulses synchronized with the cycle in reading of the original pixel signals, the weight coefficient can be determined by the magnification factor and the count value of clock pulses.

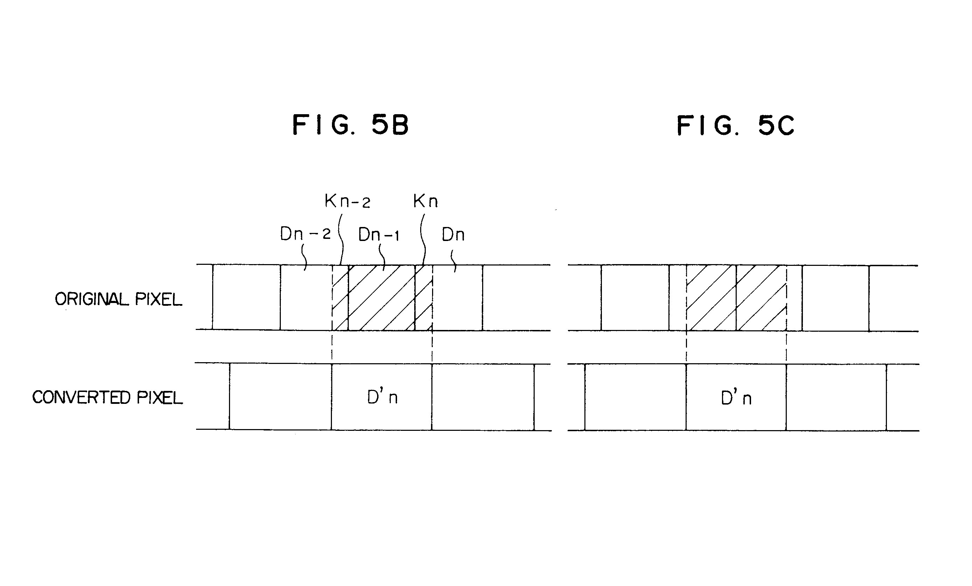

Next, a general case will be described. In this embodiment, the conversion processing of line density is executed separately for the rows and columns of the pixels arranged in a matrix. First, as for the rows, in a case where 400 dpi image data is to be converted into 300 dpi image data, assuming that each original pixel is indicated by n (n = 1 to 400), a pixel signal thereof is represented by $D_n$, each converted pixel is denoted by n' (n' = 1 to 300), and a pixel signal thereof is represented by $D_{n'}$, since the size of the converted pixel is 4/3 of that of the original pixel, there exist the states of Fig. 5B and Fig. 5C.

In the state of Fig. 5B, the converted data $D_{n'}$ is expressed as data which is the sum of a value obtained by multiplying data $D_{n-2}$ of the original pixel by a weight coefficient $K_{n-2}$, data $D_{n-1}$, and a value attained by multiplying data $D_n$ by a weight coefficient $K_n$. In consequence, it is given by

$$D_{n'} = (1 - K_{n-2}) \cdot D_{n-2} + D_{n-1} + k_n \cdot D_n.$$

The first term $(1-K_{n-2}) \cdot D_{n-2}$ of the right side is calculated by a differential operational latch 3 and stored therein, the second term $D_{n-1}$ of the right side is stored in an image data latch 1, and the third term $K_n \cdot D_n$ is calculated by the multiplying LUT 2. Then the respective values are inputted to an adder 6, thereby obtaining $D_{n'}$.

On the other hand, in Fig. 5C, the converted data $D_{n'}$ is expressed as data of the sum of a value obtained by multiplying data $D_{n-1}$ of the original pixel by a weight coefficient $K_{n-1}$ and a value attained by multiplying data $D_n$ by a weight coefficient $K_n$. Consequently, it is given by

$$D_{n'} = (1 - K_{n-1}) \cdot D_{n-1} + K_n \cdot D_n.$$

The first term $(1-K_{n-1}) \cdot D_{n-1}$ of the right side is calculated by the differential operational latch 3 and stored therein and the second term $K_n \cdot D_n$ of the right side is calculated by the multiplying LUT 2. Then, the respective values are inputted to the adder 6, thereby obtaining $D_{n'}$.

The processing described above is executed by the circuit of Fig. 4 as follows.

In an ROM 44a provided in a coefficient selection latch 44, there are stored the weight coefficients corresponding to magnification factors and count values of clock pulses in a form of a table. The magnification factor is externally supplied to the latch 44, whereas a clock pulse synchronized with an image signal read clock is fed to a data timing unit 45. A weight coefficient corresponding to the count value of clock pulses and the magnification factor is read from the table in the ROM 44a and delivered to a multiplication LUT 42. On the other hand, pixel signals of image data are sequentially supplied to an image data latch 41, a differential operation latch 43, and the multiplication LUT 42. Assume that image data $D_n$ is supplied in this case. From the table of the ROM 42, the multiplication LUT 42 reads a value of $D_n \cdot K_n$ corresponding to the weight coefficient $K_n$ and the pixel signal $D_n$ supplied from the coefficient selection latch 44 and keeps the value therein. Moreover, the differential operational latch 43 computes the difference $(D_n - D_n \cdot K_n)$ between the pixel signal $D_n$ and $D_n \cdot K_n$ obtained by the multiplication latch 42 and the result of computation is held therein. On the other hand, the image data latch 41 keeps the image signal $D_n$.

According to this embodiment, a plurality of weight coefficients are beforehand determined for the respective magnification factors and a look-up table is provided in the ROM 42a of the multiplication LUT 42 which receives the weight coefficient and the pixel signal (8 bits) and obtains a product in multiplication of the received weight coefficient and the value of the pixel signal from the look-up table. In consequence, by inputting an address specifying the weight coefficient and the pixel signal value to the multiplication LUT 42, the product therebetween is outputted from the LUT 42.

In this connection, when the magnification factor ranges from 51% to 99%, the weight coefficient can actually take one of 2167 different values. However, by optimization to make the signal-to-noise (S/N) ratio of the converted image 48 dB or more (8-bit resolution), the weight coefficient (8 bits) is set to one of 253 different values. Consequently, the ROM 42a needs only a capacity of 512 kilobits.

The address designating the weight coefficient used by the multiplication LUT 42 is supplied from the coefficient selection LUT 44. The LUT 44 includes the 64 kilobit ROM 44a having a look-up table used for reading out a weight coefficient corresponding to an inputted magnification factor (6 bits). The weight coefficient is inputted to the multiplication LUT 42 of the converted image of the clock signal supplied from the data timing unit 45 when each pixel signal is inputted to the multiplication LUT 42.

The differential operational latch 43 holds a value of (Dn-2 - Dn-2•Kn-2) which is obtained when the preceding converted pixel signal Dn' is computed. Moreover, the image data latch 41 holds the pixel signal Dn-1 which has been previously supplied thereto. When the pixel signal Dn is subsequently supplied thereto, the multiplication LUT 42 obtains Dn•Kn and then these values of (Dn-2 - Dn-2•Kn-2), Dn-1 and Dn•Kn are transmitted to an adder 46, thereby attaining a value of (Dn-2 - Dn-2•Kn-2) + Dn-1 + Dn•Kn. Timings for transmitting the values held in the multiplication LUT 42, the differential operational latch 43, and the image data latch 41 to the adder are controlled by clock pulses from the data timing unit 45.

In this regard, as seen from Fig. 5B, the pixel signal Dn-2 contributes to the preceding converted pixel signal Dn-1' by Dn-2•Kn-2 and to the next converted pixel signal Dn' by (Dn-2 - Dn-2•Kn-2). The first term (1 - Kn-2)Dn-2 of the computation formula of Dn' described above indicates this value.

The data timing unit 45 generates, upon receiving a clock signal from a clock generator (not shown), a clock signal for determining a timing when the differential operational latch 43 transmits its output to the adder and a clock signal for determining a timing when the image data latch 41 transmits the input image signal to the adder 46. As can be understood from the above description, the timings are determined by the magnification factor and the computation cycle. The data timing unit 45 outputs the timings in each computation cycle, which are selected according to the value of the magnification factor inputted thereto.

For example, whether the positional relationship between the original pixel and the converted pixel is at the state of Fig. 5B or the state of Fig. 5C is definitely determined by the magnification factor and the computation cycle. Consequently, the data timing unit 45 judges the state based on the magnification factor inputted thereto and the computation cycle thereby supplying the selected clock signals to the differential operational latch 43 and the image data latch 41.

In this connection, since the adder 46 has a nine-bit output, the output is divided by the magnification factor to obtain an eight-bit output.

A similar processing is executed in the column direction by using the data Dn' converted in the row direction processing as original data thereby to finally output data undergone the line density conversion to an external device.

As can be understood from the above description, in a method of and apparatus for converting the line density according to the embodiment, numeral data of all original pixels corresponding to the converted pixel are subjected to weighted averaging by weighting each of the respective original pixels by a weighting coefficient corresponding to an occupation ratio of the original pixel in the converted pixel. Thus, it is possible to effectively reflect the data of each original pixel on the data of the converted pixels so that the change in data between consecutive pixels after conversion becomes smooth, resulting in ensuring the continuity in whole of the image data and improving the quality of image.

**Claims**

1.  An image data processing method of converting first image data representing an image including a plurality of first pixels in a first density into second image data representing the image by a plurality of second pixels in a second density which is a multiplication of the first density by a selected magnification factor, comprising the steps of:

    obtaining a ratio of a size of a portion of each of the first pixels overlapping with each of the second pixels to a size of the first pixel; and

    weighted averaging pixel signals representing the overlapping first pixels, and weighted by weight coefficients determined by the corresponding ratios, respectively, thereby obtaining a pixel signal representing each of the second pixels.

2.  An image data processing method according to Claim 1, further including the step of correction processing of applying a predetermined correction to the first image data prior to conversion of the first image data into the second image data, wherein the correction processing step includes the steps of:

    determining, for each of the pixel signals of the first image data, a correction constant for the predetermined correction processing;

    dividing each of the pixel signals into a plurality of bit blocks, each of the bit blocks having a predetermined number of bits;

    applying a predetermined operation processing to a number represented by each of the plural bit blocks of the pixel signal and the correction constant determined for the pixel signal thereby attaining corrected partial data for each of the plural bit blocks; and

9

composing the corrected partial data respectively obtained for the plural bit blocks of the pixel signal thereby obtaining a corrected pixel signal.

3. An image data processing apparatus for converting first image data representing an image including a plurality of first pixels in a first density into second image data representing the image by a plurality of second pixels in a second density which is a multiplication of the first density by a selected magnification factor, comprising:

means for obtaining a ratio of a size of a portion of each of the first pixels overlapping with each of the second pixels to a size of the first pixel; and

means for weighted averaging pixel signals representing the overlapping first pixels and weighted by weight coefficients determined by the corresponding ratios, respectively, thereby obtaining a pixel signal representing each of the second pixels.

4. An image data processing apparatus according to Claim 3, further including correction processing means for applying a predetermined correction to the first image data prior to conversion of the first image data into the second image data, wherein the correction processing means includes:

means for determining, for each of the pixel signals of the first image data, a correction constant for the predetermined correction processing;

means for dividing each of the pixel signals into a plurality of bit blocks, each of the bit blocks including a predetermined number of bits;

means for applying a predetermined operation processing to a number represented by each of the plural bit blocks of the pixel signal and the correction constant determined for the pixel signal, thereby attaining corrected partial data for each of the plural bit blocks; and

means for composing the corrected partial data obtained for the plural bit blocks of the pixel signal, respectively, thereby obtaining a corrected pixel signal.

5. An image data processing method of applying a predetermined correction processing to image data representing an image including a plurality of pixels, each of the pixels being represented by a pixel signal including a predetermined number of bits, comprising the steps of:

determining, for each of the pixel signals, a correction constant for the predetermined correction processing;

dividing the pixel signal into a plurality of bit blocks, each of the bit blocks including a predetermined number of bits;

applying a predetermined operation processing to a number represented by each of the plural bit blocks of the pixel signal and the correction constant determined for the pixel signal, thereby obtaining corrected partial data for each of the plural bit blocks; and

composing the corrected partial data obtained for the plural bit blocks of the pixel signal, respectively, thereby obtaining a corrected pixel signal.

6. An image data processing method according to Claim 5, wherein the predetermined correction processing is processing of correcting shading distortion of the image data.

7. An image data processing apparatus for applying a predetermined correction processing to image data representing an image including a plurality of pixels, each of the pixels being represented by a pixel signal including a predetermined number of bits, comprising:

means for determining, for each of the pixel signals, a correction constant for the predetermined correction processing;

means for dividing each of the pixel signals into a plurality of bit blocks, each of the bit blocks including a predetermined number of bits and applying a predetermined operation processing to a number represented by each of the plural bit blocks of the pixel signal and the correction constant determined for the pixel signal, thereby obtaining corrected partial data; and

means for composing the corrected partial data obtained for the plural bit blocks of the pixel signal, respectively, thereby obtaining a corrected pixel signal.

# FIG. 1

## PRIOR ART

```
┌─────────────────────┐
│     CCD SENSOR      │  1
└─────────────────────┘
           ↓
┌─────────────────────┐
│   A/D CONVERSION    │  2
└─────────────────────┘
           ↓
┌─────────────────────┐
│      SHADING        │  3
│     CORRECTION      │
└─────────────────────┘
           ↓
┌─────────────────────┐
│  GRADE CONVERSION   │  4
│   ( r CORRECTION )  │
└─────────────────────┘
           ↓
┌─────────────────────┐
│    LINE DENSITY     │  5
│     CONVERSION      │
└─────────────────────┘
           ↓
┌─────────────────────┐
│   MTF CORRECTION    │  6
└─────────────────────┘
           ↓
┌─────────────────────┐
│  COLOR CORRECTION   │  7
└─────────────────────┘
           ↓
```

# FIG. 2A

WHITE DATA

LEVEL →

BLACK DATA

PIXEL →

# FIG. 2B

WHITE DATA

LEVEL →

BLACK DATA

PIXEL →

# FIG. 3

# FIG. 4

WEIGHT COEFFICIENT

MULTIFICATION FACTOR — 6 BITS → **LUT FOR COEFFICIENT SELECTION / ROM** (44, 44a) → **LUT FOR MULTIPLICATION / ROM** (42, 42a) → 8 BITS → **ADDER** (46) → 9 BITS → **DIVIDER** (47) → 8 BITS

CLOCK → **DATA TIMING UNIT** (45) — 7 BITS →

**DIFFERENTIAL OPERATION LATCH** (43) → 8 BITS → ADDER

VIDEO DATA — 8 BITS → **VIDEO DATA LATCH** (41) → 8 BITS → ADDER

EP 0 631 429 A1

# FIG. 5A

ORIGINAL PIXEL

CONVERTED PIXEL

# FIG. 5B

# FIG. 5C

ORIGINAL PIXEL

CONVERTED PIXEL

EP 0 631 429 A1

International application No.

PCT/JP94/00029

| A. | CLASSIFICATION OF SUBJECT MATTER |
|---|---|

Int. Cl$^5$  H04N1/40, H04N1/387

According to International Patent Classification (IPC) or to both national classification and IPC

| B. | FIELDS SEARCHED |
|---|---|

Minimum documentation searched (classification system followed by classification symbols)

Int. Cl$^5$  H04N1/40, H04N1/387

Documentation searched other than minimum documentation to the extent that such documents are included in the fields searched

Jitsuyo Shinan Koho          1984 - 1994
Kokai Jitsuyo Shinan Koho    1984 - 1994

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X<br>A | JP, A, 1-277057 (Fujitsu Ltd.),<br>November 7, 1989 (07. 11. 89), (Family: none) | 1, 3<br>2, 4 |
| A | JP, A, 2-22961 (NEC Corp.),<br>January 25, 1990 (25. 01. 90), (Family: none) | 2, 4-7 |
| A | JP, A, 58-24457 (Canon Inc.),<br>December 14, 1983 (14. 02. 83), (Family: none) | 2, 4-7 |

| ☐ Further documents are listed in the continuation of Box C. | ☐ See patent family annex. |
|---|---|

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| April 12, 1994 (12. 04. 94) | April 19, 1994 (19. 04. 94) |

| Name and mailing address of the ISA/ | Authorized officer |
|---|---|
| Japanese Patent Office | |
| Facsimile No. | Telephone No. |